# EUROPEAN PATENT SPECIFICATION

(11) **EP 1 874 700 B1**
(45) Date of publication and mention of the grant of the patent: **23.10.2019**
(21) Application number: 05737524.8
(22) Date of filing: 11.04.2005
(51) Int. Cl.: C03B 29/08, C03B 27/016, C03B 27/04, C03B 27/044, B32B 17/10

(54) **METHOD OF AND APPARATUS FOR STRENGTHENING EDGES OF ONE OR MORE GLASS SHEETS**
VERFAHREN UND VORRICHTUNG ZUM VERSTÄRKEN DER KANTEN EINER ODER MEHRERER GLASPLATTEN
PROCEDE ET APPAREIL DESTINES A RENFORCER LES BORDS D'UNE OU PLUSIEURS VITRES

(43) Date of publication of application: 09.01.2008
(73) Proprietor: Pittsburgh Glass Works, LLC, Pittsburgh, PA 15212 (US)
(72) Inventor: SKEEN, W. Jason, Mansfield, OH 44903 Richland County (US); ALCORN, Dennis, Verona, Pennsylvania 15147 (US); FRANK, Robert G., Sarver, Pennsylvania 16055 (US); HORCICAK, Steven M., New Kensington, Pennsylvania 15068 (US)
(74) Representative: Hohendorf, Carsten
(86) International application number: PCT/US2005/012426
(87) International publication number: WO 2006/110145

(56) References cited:
- EP-A- 0 400 631
- EP-A2- 1 215 039
- DE-B3- 10 257 972
- US-A- 4 749 399
- US-A- 4 826 522
- US-A- 4 871 385
- US-A- 5 679 124
- US-A- 5 938 810
- US-A- 6 015 619
- PATENT ABSTRACTS OF JAPAN vol. 018, no. 588 (C-1271), 10 November 1994 (1994-11-10) -& JP 06 219759 A (CENTRAL GLASS CO LTD), 9 August 1994 (1994-08-09)
- Us Federal Government: "Downloaded from", 1983, 13 September 2013 (2013-09-13), XP055529427, Retrieved from the Internet: URL:http://everyspec.com/FED_SPECS/D/downl oad.php?spec=DD-G-1403C.014106.PDF [retrieved on 2018-12-03]

## Description

### BACKGROUND OF THE INVENTION

### 1. Field of the Invention

This invention relates to a method of and an apparatus for cooling edge portions, e.g. peripheral and marginal edge portions, of one or more sheets, e.g. one or more glass sheets, to strengthen the edge portions of the sheets, and in particular, to method of and apparatus for extracting heat at a faster rate from edge portions of heated glass sheets supported on a bending iron than the central portions of the sheets to rapidly cool and strengthen the edge portions of the sheets.

### 2. Discussion of Technical Background

The method of laminating glass windows for vehicles, e.g. automotive windshields, usually includes the steps of forming the glass sheets, e.g. by placing a pair of glass sheets onto a mold commonly referred to as one of the following: a bending iron, a bending mold, a shaping mold and an outline mold, and moving the outline mold and glass sheets supported thereon through a heating furnace for gradual heating and gravity sagging of the pair of glass sheets to provide glass sheets having a desired shape. After the sheets are shaped, the sheets are slowly cooled during an annealing cycle to remove most of the stress from the glass sheets. Edge compression for such glass sheets is normally about 1500 to 2500 pounds per square inch ("psi") (10.3 to 17.3 x 10⁶ Pascals ("Pa")). After the shaping and annealing operations, a sheet of polyvinyl butyral is placed between the glass sheets to provide a subassembly which is exposed to heat and pressure during a conventional laminating process to form a laminated glass window, e.g. a laminated automotive windshield.

It is generally understood that edge compression of less than about 1500 psi (10.3 x 10⁶ Pa) increases the probability of damaging the edges of a laminated glass window, e.g. a laminated windshield during installation into a vehicle window opening. As can be appreciated, increasing the edge compression to at least 3000 psi, e.g. 3,000 - 5,000 psi (20.7 - 34.5 x 10⁶ Pa) reduces the tendency of edge damage, e.g. during installation of the windshield.

U. S. Patent No. ("USPN") 5,938,810 discusses press-bending sheets utilizing forced area cooling. In general, a sheet of glass is heated to a formable state and pressed between a rigid mold and pressing member. The pressing member presses the heated sheet against the rigid mold to bend and cool the sheet. USPN 5,938,810 recognizes that in some applications, for instance in windshields, it is desirable to cool the edge of the glass sheet at a faster rate than the central portion of the sheet to provide an enhanced edge temper on the glass sheet. The cooling of the glass edges is accomplished by using an internal air manifold that directs air to the edge of a heated glass sheet while the sheet is between the rigid mold and the pressing member.

USPN's 4,749,399; 5, 679,124 and 6,015,619 also discuss techniques of cooling marginal edge portions of glass sheets supported on cooling rings to strengthen the edges of glass sheets.

Although there are techniques to cool the edges of a glass sheet while the sheet is between pressing molds, and to cool the marginal edges of a glass sheet while on a cooling ring; there are no satisfactory techniques to cool the peripheral edges of a pair of shaped glass sheets while supported on an outline mold, e.g. but not limited to outline molds, and/or shaping techniques, of the types discussed in USPN's 3,976,462; 4,375,978; 4,687,501; 4,894,080; 4,979,977; 5,049,178; 4, 871, 385 and 4, 826, 522.

As can be appreciated, it would be advantageous to provide a method of and apparatus for extracting heat at a faster rate from the peripheral and marginal edge portions of heated glass sheets supported on an outline mold than the central portions of the sheets to cool and strengthen at least the peripheral edge portions of the glass sheets.

### SUMMARY OF THE INVENTION

The present invention provides a furnace comprising: a section defined as a heating section capable of attaining a predetermined temperature, the heating section having an entrance end and an exit end; a section defined as a cooling section capable of having a temperature gradient from entrance end of the cooling section to exit end of the cooling section, the entrance end of the cooling section mounted in a fixed relationship to the exit end of the heating section; a section defined as an edge cooling section between the exit end of the heating section and the entrance end of the cooling section; and an edge cooling device positioned in the edge cooling section relative to a predetermined area, and capable of cooling at least selected peripheral portions of the predetermined area at a faster rate than center portions of the predetermined area. The furnace
includes a conveying arrangement to move a glass sheet through the heating section, into the predetermined area of the edge cooling section, wherein at least peripheral portions of the sheet are cooled faster than center portions of the sheet, and through the cooling section, wherein the cooling section has a temperature gradient to provide the glass sheet within one of the following categories: an annealed sheet, a tempered sheet and a heat strengthened sheet. The edge
cooling device is selected from equipment for directing fluid toward the predetermined area and equipment for providing a negative pressure to the predetermined area.

The present invention also provided a method of strengthening at least the peripheral edge portions of at least one sheet, the at least one sheet having opposite major surfaces and a peripheral edge between and interconnecting the opposite major surfaces, the method comprising: heating the at least one sheet to a temperature above strain point of the sheet; positioning a heat-extracting medium in facing relation to selected peripheral edge portions of the at least one sheet; extracting heat from at least selected peripheral edge portions of the at least one sheet while having a center portion of at least one of the major surfaces of the at least one sheet out of contact with any solid object, wherein heat is extracted from the at least selected peripheral edge portions of the at least one sheet at a rate sufficient to increase the edge strength of the at least selected peripheral edge portions and adjacent marginal edge portions of the at least one sheet and to establish a temperature differential between the peripheral edge portions of the at least one sheet and the center portion of the at least one sheet to prevent fracturing of the at least one sheet during the practice of extracting heat. In nonlimiting embodiments of the invention, the cooling step is selected from one of the following steps: annealing the shaped glass sheets, heat strengthening the shaped glass sheets and tempering the shaped glass sheets.

In another embodiment of the present invention involving a method of making a windshield by heating and shaping a pair of glass sheets while supported on an outline mold, annealing the shaped sheets placing a plastic interlayer between the shaped glass sheets, and autoclaving the shaped glass sheets having the plastic interlayer there between to laminate the shaped glass sheets and plastic interlayer together, the methods includes an improvement comprising: after the practice of heating and shaping, extracting heat from at least selected peripheral edge portions of the sheets while supported on the outline mold at a rate sufficient to increase edge strength of the at least selected peripheral edge portions and adjacent marginal edge portions of the sheets and to establish a temperature differential between the at least selected peripheral edge portions of the sheets and center portions of the sheets to prevent fracturing of one or both of the sheets during the practice of extracting heat.

The present invention further provides an annealed glass sheet with a strengthened peripheral edge, wherein the strengthened peripheral edge within a distance of 0.125 inch (0.32 cm) from the peripheral edge of the annealed glass sheet has a strength of at least 3,000 psi (20.7 x 10⁶ Pa). Although not required, the glass sheet is part of a transparency selected from transparencies for above water, below water, air and/or space vehicles; automotive side windows, automotive back windows, multiple glazed windows for homes, buildings and temperature controlled storage compartments having a viewing area.

### BRIEF DESCRIPTION OF THE DRAWING

Fig. 1 is an isometric view of a nonlimiting outline mold or bending iron that can be used in the practice of the invention.
Fig. 2 is a plan view of the interior of a nonlimiting embodiment of a lehr that can be used in the practice of the invention to shape a pair of glass sheets, edge strengthen the edge portions of the sheets in accordance to the invention and anneal the edge strengthened shaped sheets.
Fig. 3 is a side elevated view of a pair of shaped glass sheets on a nonlimiting embodiment of an outline mold or bending iron having equipment incorporating features of the invention to extract heat from at least the peripheral edges of the shaped sheets in accordance to the invention.
Fig. 4 is a plan view of the interior of a nonlimiting embodiment of a furnace that can be used in the practice of the invention to shape a pair of glass sheets, edge strengthen the edge portions of the sheets in accordance to the invention and anneal the edge strengthened shaped sheets.
Fig. 5 is a plane view of a heat extracting member incorporating features of the invention positioned about the peripheral edges of glass sheets to strengthen the edges of the glass sheets in accordance to the teachings of the invention.
Fig. 6 is a fragmented side elevated view of a nonlimiting embodiment of a member for extracting heat from the edges of glass sheets in accordance to the teachings of the invention.
Fig. 7 is a view similar to the view of Fig. 5 of a nonlimiting embodiment of the invention for zone strengthening edge portions of glass sheets.

### DETAILED DESCRIPTION OF THE INVENTION

In the following discussion of nonlimiting embodiments of the invention, heat is extracted or removed from at least the peripheral edges of a pair of shaped glass sheets supported on an outline mold, also referred to as a bending iron, bending mold, or shaping mold, to cool the peripheral and marginal edges of the glass sheets during the end of a shaping cycle or process, and/or the start of an annealing cycle or process, at a faster rate than the central portion of the glass sheets to strengthen at least the peripheral edge portions of the sheets. The shaped glass sheets are subsequently processed, e.g. laminated in any usual manner to manufacture automotive windshields. As will be appreciated, the invention is not limited to the number of sheets that can have their edge portions cooled and strengthened at one time, e.g. but not limiting the invention thereto, the edge portions of one, two, three or more sheets can be cooled and strengthened at one time. Further, the invention is not limited to the materials of the glass sheets, e.g. but not limiting the invention thereto, the edges portions of plastic, metal, ceramics and glass-ceramics sheets can be cooled. Still further, the invention is not limited to extracting heat from the peripheral and/or marginal edge portions of shaped sheets, e.g. but not limiting the invention thereto, the invention can be practiced to extract heat from the peripheral and/or marginal edges of flat sheets. In addition, the invention is not limited to cooling and strengthening the peripheral and/or marginal edge portions of sheets prior to an annealing process, e.g. but limiting the invention thereto, the invention can be practiced on sheets prior to a tempering and/or heat strengthening process. Further, the invention is not limited to using the glass sheets in a process to make laminated automotive windshields, e.g. but not limiting the invention thereto, the glass sheets having the peripheral edge portions strengthened according to the invention can be used in a process to make a transparency or part of a transparency for land, above water, below water, air and/or space vehicle, e.g. an automotive side window and/or back window, for multiple glazed windows for homes, buildings and temperature controlled \ storage compartments having a viewing area. As can be appreciated, the invention is not limited to the equipment used, and/or process practiced, to heat the sheets, to shape the sheets, to cool the sheets and/or subsequently process the sheets, e.g. but not limiting to the invention, laminate a pair of shaped glass sheets to make automotive windshields.

As used herein, spatial or directional terms, such as "inner", "outer", "left", "right", "up", "down", "horizontal", "vertical", and the like, relate to the invention as it is shown in the drawing figures. However, it is to be understood that the invention can assume various alternative orientations and, accordingly, such terms are not to be considered as limiting. Further, all numbers expressing dimensions, physical characteristics, and so forth, used in the specification and claims are to be understood as being modified in all instances by the term "about". Accordingly, unless indicated to the contrary, the numerical values set forth in the following specification and claims can vary depending upon the desired properties sought to be obtained by the present invention. At the very least, and not as an attempt to limit the application of the doctrine of equivalents to the scope of the claims, each numerical parameter should at least be construed in light of the number of reported significant digits and by applying ordinary rounding techniques. Moreover, all ranges disclosed herein are to be understood to encompass any and all subranges subsumed therein. For example, a stated range of "1 to 10" should be considered to include any and all subranges between (and inclusive of) the minimum value of 1 and the maximum value of 10; that is, all subranges beginning with a minimum value of 1 or more and ending with a maximum value of 10 or less, e.g., 1 to 7.6, or 3.7 to 9.1 or 5.5 to 10. Also, as used herein, the terms "deposited over", "applied over", or "provided over" mean deposited, applied, or provided on but not necessarily in surface contact with. For example, a material "deposited over" a substrate does not preclude the presence of one or more other materials of the same or different composition located between the deposited material and the substrate.

Nonlimiting embodiments of the invention will be discussed with the process of making automotive windshields. It is understood that the invention is not limited in its application to the details of the particular embodiments shown and discussed since the invention is capable of other embodiments. Further, the terminology used herein is for the purpose of description and not of limitation. The process for fabricating automotive windshields for ease of discussion and for a full appreciation of the invention is considered to include a bending cycle and a laminating cycle. In the following discussion, unless indicated otherwise, like numbers refer to like elements.

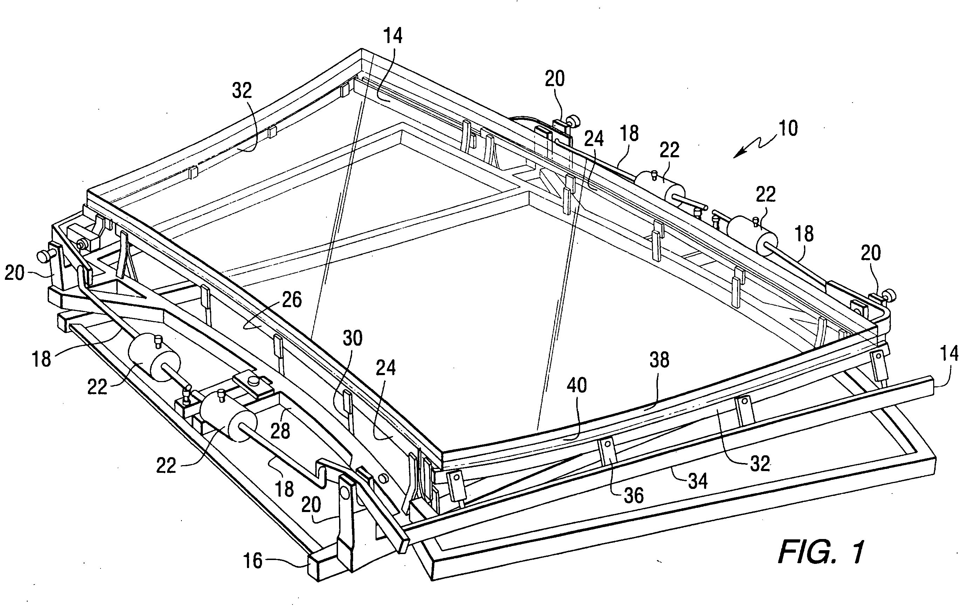

Referring to Fig. 1, there is shown an articulating glass outline mold or bending iron 10 of the type discussed in USPN's 3,976,462, 4,687,501 and 4,979,977, and Canadian Patent No. 736,880. As can be appreciated, non-articulating bending molds of the type discussed in USPN 4,375,978 can also be used in the practice of the invention. Fig. 1 is similar to Fig. 1 of USPN's 4,687,501 and 4,979,977 with the exception that the heat retaining shields discussed in USPN 4,687,501, and the shaping pan member discussed in USPN 4,979,977 have been removed for purposes of clarity; however, as can be appreciated, the embodiments of the invention can be practiced with the bending mold shown in Fig. 1 having the heat retaining shields discussed in USPN 4,687,501 and/or the heat resistance cover discussed in USPN 4,979,977. USPN's 3,976,462; 4,375,978; 4,687,501 and 4,979,977, and Canadian Patent No. 736,880 are hereby incorporated by reference.

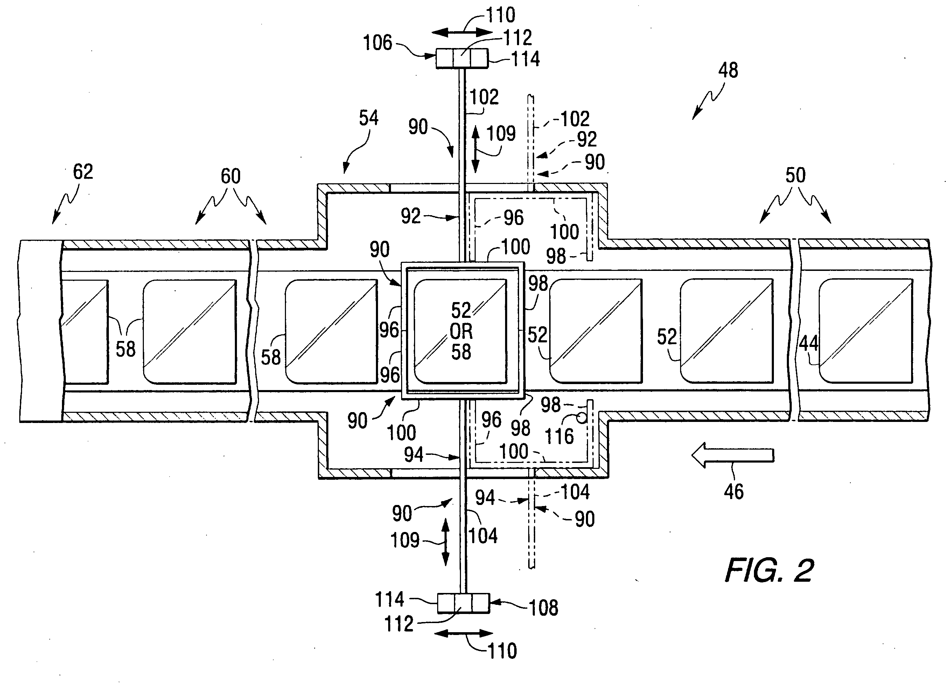

With reference to Fig. 1, the bending mold 10 includes a central mold portion 12 flanked by two pivoting mold end sections 14. The mold 10 is supported for movement through a heating lehr of the type shown in Fig. 2 by a main frame 16. Weight arms 18 are attached to each of the mold end sections 14 and are mounted on the frame 16 by hinge posts 20. The weight arms 18 are provided with counterweights 22 at their longitudinal inward extremities, which tend to rotate the mold end sections 14 about the hinge posts 20 from an open position (not shown) to a closed position as depicted in Fig. 1. The weight arms 18 are positioned laterally outside shaping rails 24 of the outline mold 10.

The shaping rails 24 of the mold 10 include central shaping rails 26 supported from rigid reinforcing bars 28 by members 30 in the central portion 12, and end shaping rails 32 supported from reinforcing bars 34 by members 36 in each of the mold end sections 14. The reinforcing bars 28 in the central mold section 12 are rigidly attached to the frame 16 while the reinforcing bars 34 in each of the end mold sections 14 are pivotally mounted on the frame 16 through the hinge post 20. When the mold sections 14 are in their pivoted upright and closed position as shown in Fig. 1, the elevational contour of the shaping rail 24 defines the final desired contour of the shaped glass sheet slightly inboard of the glass sheet perimeter.

### BENDING CYCLE

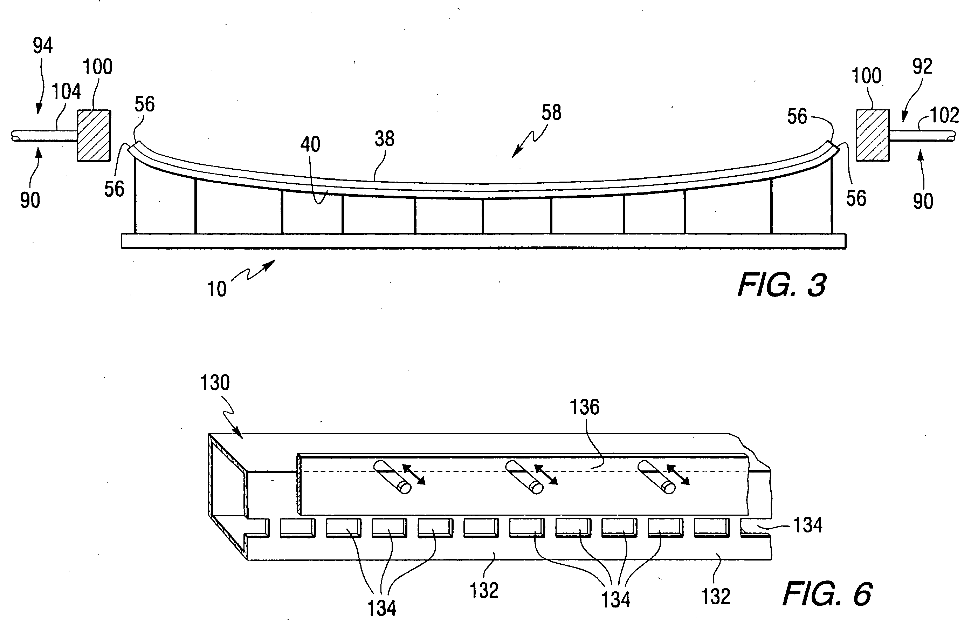

In a nonlimiting embodiment of the invention, the basic steps practiced in bending or shaping glass sheets using bending irons include:
(1) Cutting a pair of flat glass sheets in any usual manner to their ultimate outlines differing slightly in size from one another, e.g. the sheet designated to be the outer sheet as the windshield is mounted is slightly larger than the other sheet.
(2) Applying a parting material to the upper surface of the slightly larger sheet of the pair of glass sheets.
(3) Aligning each pair of sheets 38 and 40 in face-to-face relation so that the slightly smaller sheet 38 is above the other sheet 40 of the pair and the parting material is between the pair of glass sheets.
   The invention is not limited to the furnace used to shape and anneal the glass sheets. In the following nonlimiting embodiment of the invention, the invention is practiced using a tunnel lehr of the type shown in Fig. 2.
(4A) Loading the pair of aligned sheets 38 and 40 at a mold loading station (not shown) on the bending mold 10 (see Fig. 1). The sheets 38 and 40 are usually flat when placed on the bending iron and the rigid flat sheets are supported on the outside shaping rails 24, and maintain the end shaping rails 32 in general alignment with the shaping rails 24 against the biasing force of the counterweights 22.
(5A) With reference to Fig. 2, passing a succession of the bending irons 10 having the pair of glass sheets 38 and 40 (the bending irons 10 having the flat glass sheets (hereinafter also referred to as "flat sheet-laden iron") are designated by the number 44) along the path 46 through a bending and annealing lehr 48 where the glass sheets 38 and 40 are heated to their deformation temperature as they pass through heating section 50 of the lehr 48 so that the sheets sag by gravity until the lower sheet conforms to the outline of the outline mold or bending iron 10 and the upper sheet of the pair sags to conform to the shape of the lower sheet (see Fig. 3). The end portions of the heat-softened sheets are raised upward by the end shaping rails 32 moving under the biasing force of the counterweights 22.
(6A) Soon after the glass sheets 38 and 40 attain their desired curvature, moving the bending iron 10 having the shaped glass sheets (the bending iron having the shaped sheets (hereinafter also referred to as "shaped sheet-laden iron") designated by the number 52 in Fig. 2) into edge cooling section 54 of the lehr 48 where peripheral edges 56 of the shaped sheets 38 and 40 (see Fig. 3) are cooled in accordance to the invention in a manner discussed below to cool the edges of the sheets at a faster rate than the central portion of the sheets to increase the edge strength of the glass sheets.
(7A) Moving the bending iron having the shaped sheets with the strengthened edges (the bending iron 10 having the edge strengthened shaped glass sheets (hereinafter also referred to "strengthened shaped sheet-laden iron") designated by the number 58 in Figs. 2 and 3) out of the edge cooling section 54 through annealing section 60 of the lehr 48 to controllably cool the glass sheets from their deformation temperature through their annealing temperature range to anneal the edge strengthened shaped glass sheets. As can be appreciated, the annealing of the shaped glass sheets can be initiated when the shaped glass sheets leave the heating section 50 and move into the edge cooling section 54.
(8A) Moving the strengthened shaped sheet-laden irons 58 from the annealing section 60 of the lehr 48 to an unload station 62 where the shaped annealed glass sheets having the strengthened edges are further cooled to a temperature at which the glass sheets can be handled.
(9A) Removing the pair of shaped annealed glass sheets having the strengthened edges from the bending iron 10 and returning the bending iron to the loading station (not shown) for a repeat of steps (4A) through (9A).

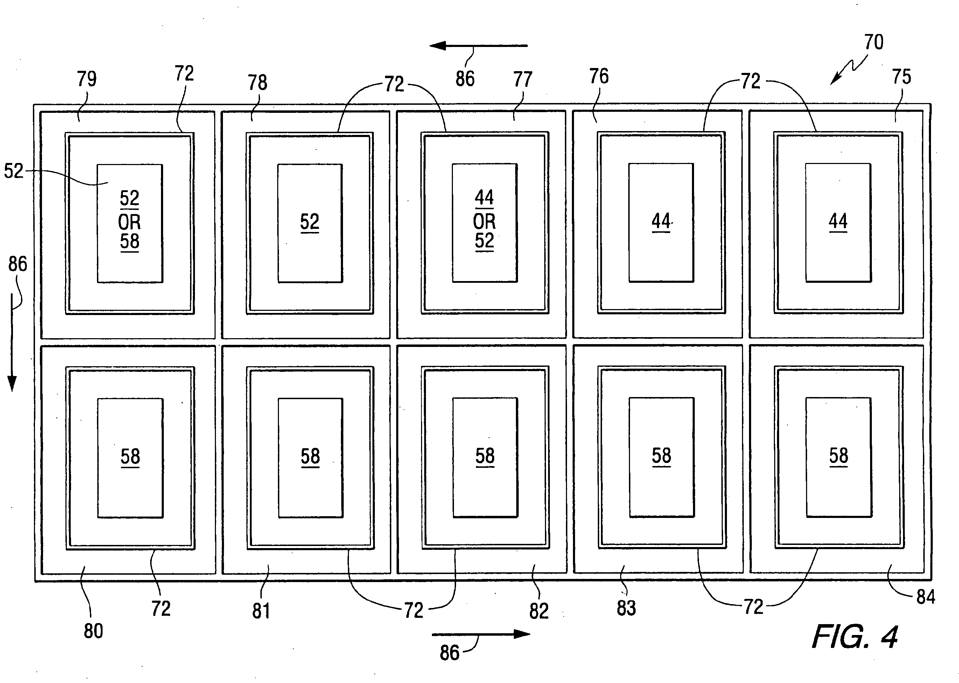

In the following nonlimiting embodiment of the invention, the invention is practiced using a furnace 70 of the type shown in Fig. 4. The furnace 70 has a conveying system (not shown) to move boxes 72 through heating compartments or zones 75 to 84 along the path designated by the arrows 86. The compartments or zones 75 - 79 are heating compartments or zones in which the glass sheets are heated and shaped, and the compartments or zones 80 - 84 are cooling compartments or zones in which the shaped sheets are annealed. The box remains in each heating compartment for a period time dependent on the size of the glass sheets to be shaped, the contour of the shape to be achieved and the number of heating compartments. Usually the box remains in each heating compartment 75 - 79 for a period of 20 - 90 seconds, and the box remains in each cooling compartment 80 - 84 for a period of 10 - 30 seconds. The boxes are usually open top boxes to expose the sheets to the heating coils (not shown) mounted on the ceiling of the furnace. A company that sells this type of furnace is Cattin Furnace Co. of Holland. As can be appreciated the furnace can have any number of heating zones and cooling zones, and the number of heating and cooling zones can be the same or different.
Steps (1) through (3) are practiced.
(4B) Loading the pair of aligned sheets 38 and 40 on a bending iron fixed inside a box 72 at a loading station (not shown). As discussed above, the sheets 38 and 40 are usually flat when placed on the bending mold and the rigid flat sheets are supported on the outside shaping rails 24, and maintain the end shaping rails 32 in general alignment with the shaping rails 24 against the biasing force of the counterweights 22.
(5B) With reference to Fig. 4, passing a succession of the boxes having flat glass-laden iron 44 along the path 86 through the compartments 75 - 78 and pausing for the predetermined time period in each compartment to heat the glass sheets to their deformation temperature so that the sheets sag by gravity until the lower sheet conforms to the outline bending mold 10 and the upper sheet of the pair sags to conform to the shape of the lower sheet (see Fig. 3). The end portions of the heat-softened sheets are raised upward by the end shaping rails 32 moving under the biasing force of the counterweights 22 to attain their desired curvature.
(6B) Moving the box 72 having a shaped sheet-laden iron 52 into the compartment 79, where peripheral edges 56 of the shaped sheets 38 and 40 (see Fig. 3) are cooled in accordance to the invention in a manner discussed below to cool the edges of the sheets at a faster rate than the central portion of the sheets to increase the edge strength of the glass sheets.
(7B) Moving the boxes having the strengthened shaped sheet-laden iron 58 out of the compartment 79, and through the compartments 80 - 84, remaining in the compartments for the predetermined time period to anneal the edge strengthened shaped glass sheets. As can be appreciated, the edge cooling of the shaped glass sheets can be performed at the end of the heating cycle, e.g. in compartment 79 or the beginning of the annealing of the shaped glass sheets, e.g. in compartment 80.
(8B) Moving the box having the strengthened shaped sheet-laden iron 58 from the compartment 84 to an unload station (not shown) where the shaped annealed glass sheets having the strengthened edges are further cooled to a temperature at which the glass sheets can be handled.
(9B) Returning the box having the bending iron to the loading station (not shown) for a repeat of steps (4B) through (9B).

The invention was practiced on soda -lime-silicate glass sheets cut from a glass ribbon made by the float process. The sheets were heated, shaped the edges of the sheets strengthened in a manner discussed below and annealed using a lehr similar to the type shown in Fig. 2, and a furnace similar to the type shown in Fig. 4.

As can be appreciated, the invention is not limited to the physical and/or chemical properties of the glass sheets that have their peripheral and marginal edge portions strengthened in the practice of the invention. For example, but not limiting to the invention, the flat glass sheets can have a solar control coating and/or electrically heatable coating having bus bars and electrically conductive leads to provide external excess to the coating. Nonlimiting embodiments of solar control and electrically conductive coatings that can be used in the practice of the invention include but are not limited to the coatings discussed in European Patent Application No. 00939609.4, which document is hereby incorporated by reference. Bus bars and conductive leads can include but are not limited to the type discussed in U.S. Patent Application Serial Nos. 10/201,863 and 10/201,864 which applications are hereby incorporated by reference.

Further, in accordance to usual practice, but not limiting to the invention, one of the glass sheets can have a black ceramic paste screen printed on the marginal edges of the sheet to prevent solar degradation of the underlying adhesive securing the windshield to the automotive body. Still further, in the practice of the invention, the glass sheets may be clear glass sheets, colored glass sheets or mixtures thereof when more than one glass sheet is on the bending iron.

Still further, as the flat-glass-laden irons 44 move through the heating section 50 of the lehr 48 (Fig. 2) or through the compartments 75 - 79 of the furnace 70 (Fig. 4), mechanical and/or air-pressured assistance, e.g. but not limited to the types discussed in USPN's 4,894,080 and 5,049,178 (not shown in the Figs. of the drawing) can be used to apply a biasing force to assist in shaping the sheets while supported on the bending iron. USPN's 4,894,080 and 5,049,178 are hereby incorporated by reference.

### Laminating Cycle

After the shaped sheets having the strengthened edges are cooled, a plastic interlayer sheet of the type used in the art of laminating glass sheets, e.g. PVB, polyvinyl chloride ("PVC") or polyurethane is placed between the shaped sheets to provide a subassembly. In the manufacture of heatable laminates, e.g. heatable automotive windshields, one of the shaped sheets has an electrically conductive coating, and the plastic sheet can be an interlayer composite having bus bars, e.g. but not limited to the type discussed in U.S. Patent Application Serial No. 10/201,863 which application is hereby incorporated by reference. A vacuum ring of the type used in the manufacture of laminated windshields is positioned over the periphery of the subassembly (the glass sheets having the interlayer sheet therebetween) and a vacuum of 20 - 28 inches of mercury is pulled. The windshield subassembly having the vacuum applied is place in an oven set at 260°F (126.7°C) for 15 minutes to heat the subassembly to a temperature of about 225°F (127.2°C). While the windshield subassembly is in the oven, the vacuum is continuously pulled through the channel to pull air from between the sheets. The heat and vacuum seals the marginal edges of the windshield subassembly. Thereafter the edge sealed windshield subassembly is placed in an air autoclave and laminated. When PVB is used for the interlayer sheet, autoclaving will normally take place at a temperature in the range of 135° C to 150° C, and a pressure of 8 to 15 bars for a period of 15 to 45 minutes. Alternative interlayer materials may be autoclaved in a higher range up to 160° C or 170° C.

A pair of shaped glass sheets having strengthened edges separated by a PVB sheet was laminated in a manner similar to the manner discussed above.

As can be appreciated by those skilled in the art of laminating, the edge sealing of the subassembly and laminating of the edge sealed subassembly is not limiting to the invention. For example, the subassembly can be sealed using nipper rollers or bagging the subassembly, and the edge sealed subassembly can be laminated in an oil autoclave.

The discussion will now be directed to nonlimiting embodiments of the invention to strength the edges of the glass sheets while supported on the outline mold or bending iron.

As discussed above, after the glass sheets are shaped, heat is extracted from at least peripheral edge portions of the glass sheets to strengthen the peripheral and marginal edge portions of the glass sheets by cooling the edge portions, e.g. the peripheral and marginal edge portions of the glass sheets at a faster rate than the central portion of the sheets. In the practice of the invention, soda-lime-silicate-glass sheets were heated to a temperature in the temperature range of 950 to 1300°F (510 to 704°C) to heat soften and shape the sheets as discussed above. Although not limiting to the invention, heat was extracted from the edge portions of shaped sheets after they were shaped and the shaped sheets were at a temperature in the temperature range of 950 to 1150°F (510 to 521°C). In the practice of the invention, it is preferred to cool the edges of the glass sheets between the deformation temperature and the annealing temperature point of the glass, and more preferably, slightly above the annealing temperature point. In this manner, the shape of the sheet has minimal if any change in its contour. A sheet that has no or minimal change in its shape is considered to be "dimensionally stable."

Nonlimiting embodiments of the invention will be discussed using the lehr 48 shown in Fig. 2. With reference to Fig. 2, there is shown heat extracting member 90 incorporating features of the invention. The member 90 includes a first section 92 and a second section 94. The sections 92 and 94 are similar in construction and each includes a pair of elongated heat extracting arm members 96 and 98 connected by elongated heat extracting intermediate arm member 100. Although not limiting to the invention, the free ends of the arm members 96 and 98 are closed. The heat extracting arm members 96, 98 and 100 are discussed in detail below. An elongated rod 102 has one end connected to the intermediate heat-extracting arm member 100 of the section 92, and an elongated rod 104 has one end connected to the intermediate arm member 100 of the section 94, of the heat-extracting member 90. The other end of each of the rods 102 and 104 is connected to a moveable push-pull arrangement 106 and 108, respectively. The components of the moveable push-pull arrangements 106 and 108 are not limiting to the invention and each function (a) to move the sections 92 and 94 along a reciprocating path 109 toward one another to position the arm members 96, 98 and 100 as shown in solid lines in Fig. 2 about a shape sheet-laden iron 52 (see also Fig. 3) and to move the sections 92 and 94 away from one another, and (b) to move the sections 92 and 94 along a reciprocating path 110 to move the heat extracting member 90 in coordinated movement with the shaped sheet-laden iron 52 as it moves through the edge cooling section 54 of the lehr 48, and to position the sections 92 and 94 of the heat extracting member 90 in a sheet receiving position as shown in phantom in Fig. 2, after the edge portions of the shaped sheets have been edge strengthened.

The components of each of the moveable push-pull arrangements 106 and 108, although not limiting to the invention can include a push-pull component 112, e.g. but not limiting the invention thereto, a piston, a rack and pinion arrangement or a chain drive, to move the sections 92 and 94 toward and away from one another, and a moveable platform 114, e.g. but not limiting to the invention a motor driven platform or a platform mounted on electrically powered rails (not shown) of the type used in the art, through which signals are forwarded to control speed and direction of the platform, to move the sections 92 and 94 of the heat extracting member 90 along the reciprocating path 110.

With reference to Figs. 2 and 3 as needed, in a nonlimiting embodiment of the invention, as the shaped sheet-laden iron 52 moves into the edge cooling section 54, the first section 92 and the second section 94 of the heat extracting member 90 are in the sheet receiving position as shown in phantom at the entrance end of the edge cooling section 54 of the lehr 48. When a shaped sheet-laden iron 52 moving into the edge cooling section 54 is aligned with the intermediate arm member 100 of the sections 92 and 94, a sensor 116 activates the push-pull component 112 of the moveable push-pull arrangements 106 and 108 to move the rods 102 and 104 toward one another to position the arm members 96, 98 and 100 of the sections 92 and 94 around the perimeter of shaped glass sheets on the bending iron 10. In Fig. 3, only the intermediate arm member 100 of the sections 92 and 94 of the heat-extracting member 90 is shown positioned adjacent the peripheral edge portions 56 of the glass sheets 38 and 40. As the heat extracting member 90 is positioned around the perimeter of the shaped sheet, the sensor 116 or timer (not shown) activates the moveable platform 114 of the moveable push-pull arrangements 106 and 108 to move through heat extracting member 90 along the path 110 toward the exit end of the edge cooling section 54 of the lehr 48, e.g. to the left as viewed in Fig. 2. As the shaped sheet-laden iron 52 moves through the edge cooling section 54, the heat extracting member 90 extracts heat from the peripheral and marginal edges of the glass sheets in a manner discussed below to strengthen the peripheral edges of the shaped sheets. After edge portions of the glass sheets are heat strengthened, portions of the rods 92 and 94 are moved out of the edge cooling section 54 by the push-pull component 112 of the moveable push-pull arrangements 106 and 108 to move the sections 92 and 94 away from one another. The edge strengthened sheet-laden mold 58 continues to move through the edge cooling section 54 into the annealing section 60 of the lehr 48 as the sections 92 and 94 are moved upstream by the moveable platforms 114 of the moveable push-pull arrangements 106 and 108 into their initial position to await the next shaped sheet-laden mold 52.

As can be appreciated, the invention is not limited to having one heat extracting member 90 incorporating features of the invention in the edge cooling section 54 of the lehr 48. For example, but not limiting to the invention, two or more heat extracting members can be provided to have one heat extracting member cooling the edges of the glass sheets, a second heat extracting member in the initial position, and a third heat extracting member moving toward the initial position, and/or any other combinations thereof.

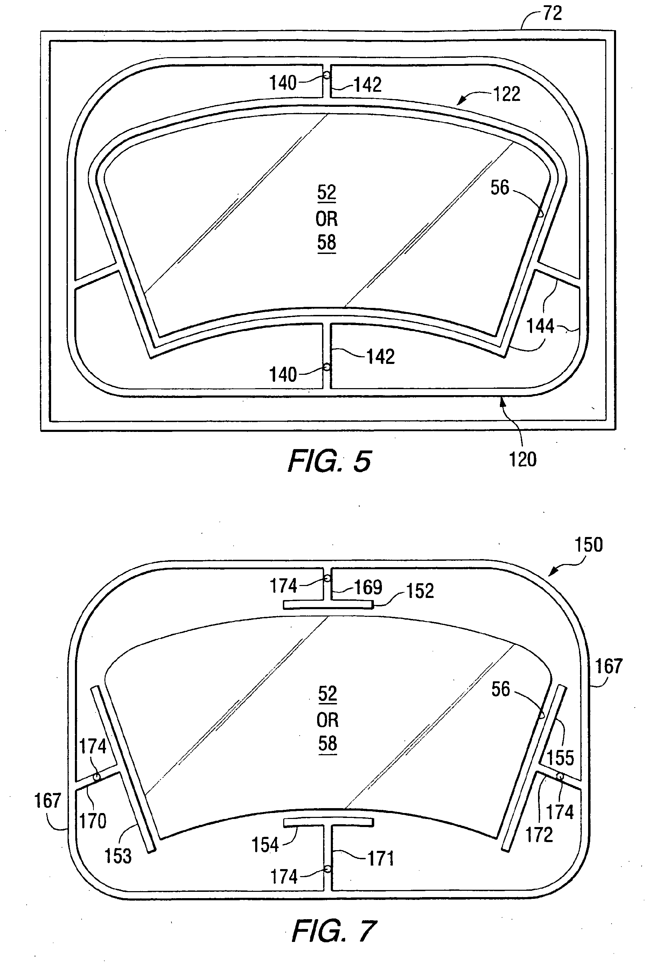

With reference to Figs. 4 and 5 as needed, in another nonlimiting embodiment of the invention, after the open top box 72 having the shaped sheet-laden iron 52 moves into the zone 79 (see Fig. 4), edge cooling device 120 incorporating features of the invention shown in Fig. 5 is moved into the box 72 in any convenient manner to position heat extracting member 122 around the perimeter or edges 56 of the shaped sheets 38 and 40, for the heat extracting member 90. The edges of the shaped glass sheets are cooled in a manner to be discussed below to cool the perimeter of the sheets at a faster rate than the center portions of the sheets to strengthen the edge portions of the sheets. After the edges of the sheets are cooled for a predetermined time, the edge-cooling device 120 is moved out of the box 72. The box 72 having the edge strengthened shaped sheet-laden iron 58 is moved from the compartment 79 to the compartment 80 as the next box 72 having the shaped sheet-laden iron 52 moves from the compartment 78 to the compartment 79.

As can be appreciated, the edge-cooling device 120 can be lowered into the box 72 to position the heat extracting member 122 around the edges of the shaped sheets and lifted out of the box 72 in any convenient manner, e.g. but not limiting to the invention using the elevator mechanism discussed in USPN's 4,894,080 and 5,049,178 for raising and lowering the mechanical and/or air-pressured bending mechanism discussed in the patents.

In the following discussion several nonlimiting embodiments of the invention to extract or remove heat from the peripheral edge portions of the sheets are discussed; however, as will be appreciated, the invention is not limited thereto. Extracting heat from the peripheral edge portions of the sheets to cool the peripheral and marginal edge portions of the sheets faster than the central portions of the sheets can be accomplished by moving a liquid toward peripheral edge portions of the glass sheets, e.g. moving gas through the arm members 96, 98 and 100 of the sections 92 and 94 (Fig. 2), and heat extracting member 122 (Fig. 5) and/or by applying a vacuum, e.g. pulling a vacuum through the arm members 96, 98 and 100 of the sections 92 and 94 to pull the heated air in the edge cooling section 54 of the lehr 48, and pulling vacuum through the heat extracting member 122 to pull the heated air in the compartment 79 of the furnace 70, over the peripheral and marginal edges of the shaped sheets to cool and edge strengthen the peripheral and marginal edge portions of the glass sheets.

In the following discussion the arm members 96, 98 and 100, and the heat extracting member 122 are manifolds to move a cooling liquid, e.g. air, or pull a vacuum there through to cool and strengthen the edges of the glass sheets. With reference to Fig. 6, a segment 130 for controlling the flow of air toward the peripheral edges of the sheets, or for pulling a vacuum adjacent the peripheral edges of the sheets is shown. The-segment 130 is not limiting to the invention and can be a segment of the heat extracting arm members 96, 98 and 100 of the heat extracting member 90 (see Fig. 2) and/or- a segment of the heat extracting member 122 (see Fig. 5.). Surface 132 of the member 130 faces the edges 56 of the glass sheets 38 and 40 and has a plurality of spaced holes 134 and a slidably mounted plate 136. With the plate 136 moved and positioned to the left as shown in Fig. 6, e.g. open position, the holes or passageway openings 1-34 are exposed, and with the plate 136 moved to the right, e.g. closed position (not shown) the holes or passageway openings 134 are covered. The plate 136 can be in the closed position as the sections 92 and 94 (Fig. 2) move from the initial position to the engaging position, and as the heat extracting member 120 moves into the box 72 (Fig. 5), to prevent premature cooling of the edges of the glass sheets. When members 92 and 94 or member 120 is in its cooling position, plate 136 to its open position so that edges 56 can be cooled. After the edges of the sheets are cooled and strengthened, the plate 136 can be moved back over the holes 134 to prevent cooling of the environment as the sections 92 and 94 are moved toward initial positions in the edge cooling section 54 of the lehr 48, or the heating extracting member 120 is lifted out of the box 72. As can be appreciated, the plate 136 can be eliminated. In this instance, the gas or vacuum is turned off as the sections 92 and 94, or the heat extracting member 120 moves into position, and the gas or vacuum is turned on when the sections, or heat extracting member are in position.

Although not limiting to the invention, but to provide an appreciation of the interaction of certain parameters the following discussion is presented. The amount and rate of heat extracted from the edges of the sheets for purposes of this discussion are a function of the difference between the temperature of the heat extracting medium, e.g. a liquid such as but not limited to gas or a vacuum, and the edges of the glass sheets; the temperature difference between the edges of the glass sheet and the interior of the glass sheet, and the thickness of the glass sheet. In the following discussion, although not limiting to the invention, the glass sheets have a thickness of 1.6 to 5 millimeters. As the temperature of the heat extracting medium decreases and the temperature difference between the heat extracting medium and the edges of the glass sheets increase while the temperature difference between the edges of the glass sheets and the interior of the glass sheets, and the temperature of the interior of the edge cooling section remain constant, the amount and rate of heat extracted from the edges of the glass sheets increases and vice versa. As the temperature of the glass edges decreases and the temperature difference between the edges of the glass sheet and the interior of the glass sheets increases while the temperature difference between the heat extracting medium and the edges of the glass sheets remain constant, the amount and rate of heat extracted from the edges decreases and vice versa. As the amount and rate of heat extracted from the edges of the glass sheets increases, the edge strength increases and vice versa. The temperature of the interior of the edge cooling section 54 of the lehr 48 and the temperature of the compartment of the furnace 70 where the invention is practiced to edge strengthened the shaped glass sheets has an effect on the rate of cooling. In the above discussion the temperature of the edge cooling section 54 and the compartment of the furnace 70 where the invention is practiced is taken into account by considering the heat of the glass sheets.

As can be appreciated, the temperature difference between the edges of the glass sheets and the interior of the glass sheets should not exceed the temperature at which the stress in the edges of the glass sheets result in fracturing the edges of the glass sheets. For soda-lime-silicate glass the temperature differential should not exceed 2500F (121°C), for example not more than 200°F (33°C).

The amount and rate of heat extracted by the medium, e.g. gas or vacuum, for purposes of this discussion
depends on the following parameters. For gas, the parameters to be considered are the temperature of the gas, the area of gas flow openings, e.g. holes 134 shown in Fig. 6, and the distance between the openings, e.g. the surface 132, and the edges 56 of the sheets 38 and 40 (see Fig. 3), the gas flow, the gas pressure and heat absorbing property of the gas. As the temperature of the gas increases while the remaining parameters remain constant, the rate and amount of heat extracted decreases and vice versa; as the area of gas flow openings increase while the remaining parameters remain constant, the amount of heat extracted can be expected to decrease and vice versa; as the distance between the openings and sheet edges increase while the remaining parameters remain constant, the amount and rate of heat extracted can be expected to decrease and vice versa; as the gas flow increases while the remaining parameters remain constant, the amount and rate of heat removal increases and vice versa; and as the heat absorbance of the gas increases, while the remaining parameters are kept constant, the rate of heat removal and depth of temper increases and vice versa.

The invention is not limited to the system used to move a liquid, e.g. gas into the arm members 96, 98 and 100 of the sections 92 and 94 of the heat-extracting member 90 shown in Fig. 2 or the heat extracting member 122 of the heat extracting device 120 shown in Fig. 5. For example, but not limiting to the invention, the gas can be moved through the rods 102 and 104, through the intermediate arm members 100 and thereafter through the arm members 96 and 98 of the sections 92 and 94 shown in Fig. 2, and through openings 140 in hollow support rods 142 to the heat extraction member 122 shown in Fig. 5. To prevent chilling of the edge portions of the glass sheets too quickly, the gas is preferably at a temperature in the temperature range of 700 to 800°F.

In one nonlimiting embodiment of the invention, gas is used to extract heat from the edge portions of the glass sheets. As can be appreciated, the invention is not limited to the type of gas used; however because the gas is used in a heated environment, gas or gas mixtures that would combustion in such an environment are not recommended and should not be used. Gases that can be used in the practice of the invention, but not limited thereto include air, carbon dioxide, nitrogen, argon and other inert gas and mixtures.

In the practice of the invention, it is preferred to extract sufficient heat to provide edge compression of at least 3000 psi, e.g. 3,000 - 5,000 psi (20.7 - 34.5 x 106 Pa). The invention contemplates the edge strengthening or tempering the peripheral edge of the glass sheet. As can be appreciated, the invention is not limited thereto and can extend from the peripheral edge of the sheet, e.g. but not limiting to the invention in the marginal edge portions of the sheet within a distance of about 0.125 inch (0.32 centimeter) from the surface of the peripheral edge of the glass sheets. In the practice of the invention, a gas manifold was placed around a pair of shaped glass sheets each having a thickness of 2.1 millimeters supported on a bending iron. The manifold was spaced 0.5 inches from the edge. The manifold had holes 134 having an open area of 0.0122 square inches and on a spacing of 0.25 inches. Air heated to a temperature of 600° F (316° C) was moved through the holes at a rate of 12 standard cubic feet per minute per foot of treated edge. The edges of the glass sheets were cooled for a period of 30 seconds and had edge strength of 4000 psi.

Consider now the use of vacuum to extract heat from the edges of the glass sheets. The parameters to consider when vacuum is used are the amount of vacuum pulled, the area of the openings, e.g. the holes 134 shown in Fig. 6, the distance between the openings, e.g. the surface 132, and the edges 56 of the sheets 38 and 40 (see Fig. 3), the distance between the adjacent vacuum holes, and the temperature of the edge cooling section 54 of the lehr 48 (see Fig. 2) or compartment of the furnace 70 where the edges of the glass sheet are cooled (see Fig. 4). As the amount of vacuum pulled increases while the remaining parameters remain constant, the amount of heat absorbed increases and vice versa; as the area of the openings increase and the remaining parameters remain constant, the amount of heat extracted increases and vice versa; as the distance between the openings increases while the remaining parameters remain constant, the amount of heat extracted decreases and vice versa, and as the distance between the openings through which the vacuum is pulled and the edges of the glass sheets increases while the remaining parameters remain constant, the amount of heat extracted decreases and vice versa. As the temperature of the edge cooling section 54 of the furnace 48 and of the compartment of the furnace 70 where the edges-of the glass sheet are cooled increases while the remaining parameters remain constant, the amount of heat extracted from the sheet decreases and vice versa.

The invention is not limited to the system used to pull the vacuum through the arm members 96, 98 and 100 of the sections 92 and 94 of the heat-extracting member 90 shown in Fig. 2 or the heat-extracting member 122 of the heat-extracting device 120 shown in Fig. 5. For example, but not limiting to the invention, a vacuum can be pulled through the rods 102 and 104, through the intermediate arm members 100, and thereafter, through the arm members 96 and 98 of the sections 92 and 94 shown in Fig. 2, and through openings 140 in hollow support rods 142 of the heat extraction member 122 shown in Fig. 5.

As can be appreciated, the invention is not limited to the manner in which the heat extracting members are positioned around the edges often sheets, e.g. but not limiting the invention thereto, the arm members 96, 98, 100 (see Fig. 2) can be separately mounted and separately move toward or away from their respective edges to cool the edge portions of the sheets as discussed, or the arm members 96, 98 and 100 can be connected to a common support e.g. support ring (not shown) which may be raised or lowered to move the arm members 96, 98 and 100 toward and away from the edges of the sheets, or the sheets lowered or raised, to position the edges of the sheets in facing relationship to the arm members 96, 98 and 100 or the heat extracting member 122.

As can be appreciated, the invention is not limited to the manner in which the gas or vacuum is supplied. For example, but not limiting to the invention, the gas or vacuum can be supplied by plant piping or storage units (now shown).

Nonlimiting embodiments of the invention contemplate strengthening the full periphery of the sheets (see Figs. 2 and 5) or selected zones of the periphery of the glass sheets (see Fig. 7) (hereinafter also referred to as "zone heating" or "zone edge strengthening"). As shown in Fig. 2, the arm members 96, 98 and 100 of the first and second sections 92, 94 of the heat extracting member 90, and as shown in Fig. 5 the heat extracting member 122 surrounds the full periphery or edge portions 56, to extract heat from the full periphery or edge portions, to edge strengthen the full periphery or edge portions 56, of the sheets 38 and 40.

With reference to Fig. 7, there is shown a nonlimiting embodiment of the invention to strengthen edge zones of the periphery. More particularly, as shown in Fig. 7, heat extracting member 150 includes heat extracting members 152 - 155 mounted on a frame 167 by hollow support rods 169 - 172, respectively to position the heat absorbing members 152 - 155 in facing relationship to selected peripheral edge portions, e.g. but not limiting to the invention, the center portion of the long sides of the sheets and the sides of the sheets as shown in Fig, 7. The selected edge portions are cooled using the RHA member, and/or moving a cooling medium through, or pulling a vacuum through members 152-155 as discussed earlier, e.g. through holes 174 in the support rods 169-172.

Zone edge strengthening can be used when a process or design applies more stress to selected edge portions of the glass sheet(s) than to other edge portions. The invention contemplates zone cooling any portion of the edges of the sheets, e.g. but not limiting to the invention, cooling two edges, e.g. opposite edges of the glass sheets, cooling only the middle portions of the edges of the glass sheets. As can be appreciated, in those instances where fractures are observed only in a given portion of the edge, e.g. as a result of design or equipment handling the glass sheets, the edges can be strengthen by cooling only that edge portion.

A nonlimiting technique to zone cool the edges of the glass sheets is to absorb heat along a gradient similar to the gradient of edge strength desired. For example but not limiting to the invention, positioning the heat absorbing member around the full periphery of the sheet and move gas or pull vacuum through holes having various size openings, or having holes of uniform size and cooling the edges as the heat extracting sections 92 and 94 (Fig. 2) are moved from the initial position to the work position; the gas or vacuum is discontinued when the sections 92 and 94 encircle the periphery of the sheets. The edge portions first cooled are cooled for a longer period of time than the edge portions last cooled and will have greater edge strength. Another technique for zone cooling is to have holes, e.g. the holes 134 of Fig. 6 with different sized opening. The larger the opening the more air flow moving out or vacuum pulled and the more cooling of the edge. As can be appreciated other techniques can be used to cool the glass at different rates or at different positions for zone cooling or gradient cooling using gas or vacuum.

As can be appreciated, the particular embodiments described in detail herein are illustrative only and are not limiting to the scope of the invention, which is to be given the full breadth of the appended claims and any and all equivalents thereof.

## Claims

1. A furnace with a cooling device for cooling edge portions of one or more sheets to strengthen the edge portions of the sheets, comprising:
a section defined as a heating section (50) capable of attaining a predetermined temperature, the heating section (50) having an entrance end and an exit end;
a section defined as a cooling section (60) capable of having a temperature gradient from entrance end of the cooling section (60) to exit end of the cooling section (60), the entrance end of the cooling section (60) mounted in a fixed relationship to the exit end of the heating section (50);
a section defined as an edge cooling section (54) between the exit end of the heating section (50) and the entrance end of the cooling section (60); and
an edge cooling device (120) positioned in the edge cooling section (54) relative to a predetermined area, and capable of cooling at least selected peripheral edge portions of the sheet at a faster rate than center portions of the sheet,
wherein the edge cooling device (120) (a) is selected from equipment for directing gas toward the peripheral edge portions of the sheet and equipment for providing a vacuum to pull gas from the peripheral edge portions of the sheet, and (b) comprises a manifold encircling the peripheral edge portions of the sheet, the manifold having an interior surface facing the peripheral edge portions of the sheet and having passageways to move a gas toward or away from the peripheral edge portions of the sheet
further comprising a conveying system to move at least one glass sheet through the heating section, through the edge cooling section to position the sheet in the predetermined area, and through the cooling section, wherein the glass sheet at the exit end of the cooling section is a glass sheet having strengthened edge portions,
wherein the heating section is capable of attaining a temperature sufficient to heat the at least one glass sheet to its shaping temperature and the conveying system comprises:
an outline mold for supporting the at least one glass sheet, and
a conveyor for moving the outline mold sequentially through the heating section, edge cooling section and edge cooling section of the furnace.

2. The furnace according to claim 1, wherein the edge cooling device is a manifold having a plurality of spaced holes.

3. The furnace according to claim 1, further including a conveying arrangement to move the glass sheet through the heating section, into the predetermined area of the edge cooling section, wherein at least peripheral portions of the sheet are cooled faster than center portions of the sheet, and through the cooling section, wherein the cooling section has a temperature gradient to provide the glass sheet within one of the following categories; an annealed sheet, a tempered sheet and a heat strengthened sheet.

4. The furnace according to claim 1, wherein the furnace further comprises a plurality of zones aligned along a movement path wherein a selected number of zones are designated the heating section, a selected number of zones are designated the cooling section and at least one zone is designated the edge cooling section and a portion of the path extending through the heating section is generally parallel to a portion of the path extending through the cooling section, and the conveying system further comprises at least one box having the outline mold therein, moveable sequentially into a zone and after a predetermined time period out of the zone into the next adjacent zone.

5. The furnace according to claim 4, further comprising displacement equipment to move the manifold into the box in the at least one zone designated as the edge cooling section to encircle the predetermined area and to move the manifold out of the box.

6. The furnace according to claim 1, wherein the movement of the outline mold from the entrance end of the heating section, through the edge cooling section and to the exit end of the cooling section defines a first movement path, and further comprising a displacement system acting on the manifold to move the manifold along at least one of the following paths (a) a vertical reciprocating path defined as a second movement path toward and away from the first movement path and (b) a horizontal reciprocating path defined as a third movement path transverse to the first movement path.

7. The furnace according to claim 6, wherein the manifold comprises a first manifold section and a second manifold section, each of the first and second manifold sections comprise a first manifold segment, a second manifold segment and a third manifold segment with each of the manifold segments having a first end and an opposite second end with the first end of the second manifold segment joined to the first end of the first manifold segment and the second end of the second manifold segment joined to the first end of the third manifold segment to provide each of the first and second manifold sections with a "U" shape; and the displacement system comprises first displacement equipment operatively connected to the first manifold section and second displacement equipment operatively connected to the second manifold section, wherein the first and second displacement equipment of the displacement system moves the first and second manifold sections toward one another along the third movement path into an engaging position to encircle the predetermined area, wherein the second ends of the first and third manifold segments of the first manifold section are aligned with the second ends of the first and third manifold segments of the second manifold section, respectively, and away from one another along the third movement into a non-engaging position, wherein the second ends of the first and third manifold segments of the first and second manifold sections are spaced from one another a sufficient distance for the outline mold to move along the first movement path between the first and second manifold sections and toward the cooling section of the furnace.

8. The furnace according to claim 7, wherein the first and second displacement equipment is moveable along a reciprocating path defined as a fourth movement generally parallel to first movement path to move the first and second manifold sections in a downstream direction to a return position and in an upstream direction to a waiting position.

9. The furnace according to claim 8, further including a sensor connected to the displacement system, wherein the sensor forwards a first signal to the first and second displacement equipment when the outline mold is in a predetermined position within the edge cooling section to move the first and second manifold sections along the third movement path into the engaging position to encircle the predetermined area and to move the first and second manifold sections in the downstream direction along the fourth movement path from the wait position to the return position, and a second signal to the first and second displacement equipment when the first and second manifold sections are at the return position to move the first and second manifold sections along the third movement path to the non engaging position and to move the first and second manifold sections in the upstream direction along the fourth movement path from the return position to the wait position.

10. The furnace according to claim 6, wherein the manifold has an endless shape to encircle the predetermined area of the edge cooling section and the displacement system comprises first displacement equipment that moves the manifold along the second movement path between a work position with the manifold a first spaced distance from the first movement path and a non-work position spaced a second distance from the first movement path, wherein the first distance is less than the second distance.

11. The furnace according to claim 10, wherein the displacement system comprises second displacement equipment acting on the first displacement equipment to move the first displacement equipment along a reciprocating path parallel to the first movement path within the edge cooling section between a wait position spaced a first distance from the exit end of the heating section to a return position spaced a second distance from the entrance end of the cooling section.

12. The furnace according to claim 11, further comprising a sensor connected to the first and second displacement equipment, wherein the sensor sends a first signal when the outline mold moves into the edge cooling station to the first displacement equipment to move the manifold along the second movement path to the work position and to the second displacement equipment to move the first displacement equipment from the wait position to the return position as the outline mold moves downstream through the edge cooling section, and a second signal when the manifold is in the return position to the first displacement equipment to move the manifold along the second movement path to the non-work position and to the second displacement equipment to move the first displacement equipment to the waiting position.

13. A method of strengthening at least the peripheral edge portions of at least one sheet while supported on an outline mold, the at least one sheet having opposite major surfaces and a peripheral edge between and interconnecting the opposite major surfaces, the method comprising:
heating the at least one sheet to a temperature above strain point of the sheet;
positioning a heat-extracting medium in facing relation to selected peripheral edge portions of the at least one sheet;
extracting heat from at least selected peripheral edge portions of the at least one sheet while having a center portion of at least one of the major surfaces of the at least one sheet out of contact with any solid object, wherein heat is extracted from the at least selected peripheral edge portions of the at least one sheet at a rate sufficient to increase the edge strength of the at least selected peripheral edge portions and adjacent marginal edge portions of the at least one sheet and to establish a temperature differential between the peripheral edge portions of the at least one sheet and the center portion of the at least one sheet to prevent fracturing of the at least one sheet during the practice of extracting heat,
wherein the step of extracting heat from the peripheral edge is selected from directing a gas toward selected peripheral edge portions of the sheets and/or providing a negative pressure around selected peripheral edge portions of the sheets using a manifold encircling the peripheral edge portions of the sheet and having an interior surface facing the peripheral edge portions of the sheet and having passageways to move gas toward or away from the peripheral edge portions of the sheet.

14. The method according to claim 13, wherein the at least one sheet is a first and second glass sheet and the heating is practiced by:
placing the first sheet over the second glass sheet;
positioning the first and second sheet on an outline mold;
heating the first and second sheets to their softening temperature to sag at least the center portion of the sheets while supported on the outline mold, and further comprising further cooling the glass sheets after extracting heat.

15. The method according to claim 13, wherein the cooling step is selected from one of the following steps: annealing the shaped glass sheets, heat strengthening the shaped glass sheets and tempering the shaped glass sheets.

16. The method according to claim 13, wherein during the practice of the heat extracting step, heat is extracted from complete periphery of the sheets.

17. The method according claim 13, comprising the step of making a windshield by heating and shaping a pair of glass sheets while supported on an outline mold, annealing the shaped sheets placing a plastic interlayer between the shaped glass sheets, and autoclaving the shaped glass sheets having the plastic interlayer therebetween to laminate the shaped glass sheets and plastic interlayer together.

18. The method according to claim 17, wherein the annealed shaped sheets have edge strength of at least 3,000 psi (20.7 x 10⁶ Pa).

19. The method according to claim 17, wherein the sheets are heated to a temperature in the temperature range of 950 to 1300°F (510 to 704°C) during the practice of heating and shaping.

20. The method according to claim 17, wherein the at least selected peripheral edge portions include the entire periphery of the sheets such that during the practice of extracting heat, heat is extracted from the entire periphery of the sheets.

21. An annealed glass sheet with a strengthened peripheral edge wherein the strengthened peripheral edge within a distance of 0.125 inch (0.32 cm) from the peripheral edge of the annealed glass sheet has a strength of at least 3,000 psi (20.7 x 10⁶ Pa).

22. The glass sheet according to claim 21, wherein the glass sheet is part of a transparency selected from transparencies for above water, below water, air and/or space vehicles; automotive side windows, automotive back windows, multiple glazed windows for homes, buildings and temperature controlled storage compartments having a viewing area.

23. A glass sheet according to claim 21, wherein the glass sheet is a shaped glass sheet.

24. The glass sheet according to claim 23, wherein the shaped glass sheet is a first shaped glass sheet and the first glass sheet is one sheet of a pair of shaped glass sheets adhered to one another by a plastic interlayer sheet to provide a laminate.

25. The glass sheet according to claim 24, wherein the laminate is an automotive windshield.

26. The glass sheet according to claim 25, wherein an inner surface of at least one of the sheets of the laminate has an electroconductive coating or a solar control coating.

## Patentansprüche

1. Ofen mit einer Kühlvorrichtung zum Kühlen von Kantenabschnitten einer oder mehrerer Scheiben, um die Kantenabschnitte der Scheiben zu verstärken, umfassend:
einen Abschnitt, der als ein Heizabschnitt (50) definiert ist, der geeignet ist eine vorbestimmte Temperatur zu erreichen, wobei der Heizabschnitt (50) ein Eingangsende und ein Ausgangsende aufweist;
einen Abschnitt, der als ein Kühlabschnitt (60) definiert ist, der geeignet ist einen Temperaturgradienten vom Eingangsende des Kühlabschnitts (60) zum Ausgangsende des Kühlabschnitts (60) aufzuweisen, wobei das Eingangsende des Kühlabschnitts (60) in einer festen Beziehung zum Ausgangsende des Heizabschnitts (50) angeordnet ist;
einen Abschnitt, der als Kantenkühlabschnitt (54) definiert ist, zwischen dem Ausgangsende des Heizabschnitts (50) und dem Eingangsende des Kühlabschnitts (60); und
eine Kantenkühlvorrichtung (120), die in dem Kantenkühlabschnitt (54) relativ zu einem vorbestimmten Bereich positioniert ist und in der Lage ist, mindestens ausgewählte periphere Kantenabschnitte der Scheibe mit einer höheren Geschwindigkeit zu kühlen als innere Abschnitte der Scheibe,
wobei die Kantenkühlvorrichtung (120) (a) ausgewählt ist aus einer Vorrichtung zum Leiten von Gas zu den peripheren Kantenabschnitten der Scheibe und einer Vorrichtung zum Bereitstellen eines Vakuums zum Ziehen von Gas von den peripheren Kantenabschnitten der Scheibe, und (b) einen Verteiler umfasst, der die peripheren Kantenabschnitte der Scheibe umgibt, wobei der Verteiler eine Innenfläche aufweist, die den peripheren Kantenabschnitten der Scheibe zugewandt ist, und Durchgänge aufweist, um ein Gas zu oder von den peripheren Kantenabschnitten der Scheibe zu bewegen.
ferner umfassend ein Fördersystem, um mindestens eine Glasscheibe durch den Heizabschnitt, durch den Kantenkühlabschnitt, um die Scheibe in dem vorbestimmten Bereich zu positionieren, und durch den Kühlabschnitt zu bewegen, wobei die Glasscheibe am Austrittsende des Kühlabschnitts eine Glasscheibe mit verstärkten Kantenabschnitten ist,
wobei der Heizabschnitt geeignet ist, eine ausreichende Temperatur zu erreichen, um die mindestens eine Glasscheibe auf ihre Formgebungstemperatur zu erwärmen, und das Fördersystem umfasst:
eine Umfangsform zum Tragen der mindestens einen Glasscheibe, und
einen Förderer zum aufeinanderfolgenden Bewegen der Umfangsform durch den Heizabschnitt, den Kantenkühlabschnitt und den Kantenkühlabschnitt des Ofens.

2. Ofen nach Anspruch 1, wobei die Kantenkühlvorrichtung ein Verteiler mit einer Vielzahl von beabstandeten Löchern ist.

3. Ofen nach Anspruch 1, ferner umfassend eine Förderanordnung zum Bewegen der Glasscheibe durch den Heizabschnitt in den vorbestimmten Bereich des Kantenkühlabschnitts, wobei mindestens periphere Abschnitte der Scheibe schneller gekühlt werden als innere Abschnitte der Scheibe, und durch den Kühlabschnitt, wobei der Kühlabschnitt einen Temperaturgradienten aufweist, um die Glasscheibe innerhalb einer der folgenden Kategorien bereitzustellen: eine vergütete Scheibe, eine gehärtete Scheibe und eine wärmegehärtete Scheibe.

4. Ofen nach Anspruch 1, wobei der Ofen ferner eine Vielzahl von Zonen umfasst, die entlang eines Bewegungspfades ausgerichtet sind, wobei eine ausgewählte Anzahl von Zonen als Heizabschnitt bezeichnet wird, eine ausgewählte Anzahl von Zonen als Kühlabschnitt bezeichnet wird und mindestens eine Zone als Kantenkühlabschnitt bezeichnet wird und ein Abschnitt des Pfades, der sich durch den Heizabschnitt erstreckt, im Allgemeinen parallel zu einem Abschnitt des Pfades verläuft, der sich durch den Kühlabschnitt erstreckt, und das Fördersystem ferner mindestens eine Box mit der darin befindlicher Umfangsform umfasst, die sequentiell in eine Zone und nach einer vorbestimmten Zeitspanne aus der Zone in die nächste angrenzende Zone bewegbar ist.

5. Ofen nach Anspruch 4, ferner umfassend eine Verstelleinrichtung zum Bewegen des Verteilers in die Box in der mindestens einen Zone, die als Kantenkühlabschnitt bezeichnet wird, um den vorbestimmten Bereich zu umschließen, und zum Bewegen des Verteilers aus dem Kasten.

6. Ofen nach Anspruch 1, wobei die Bewegung der Umfangsform vom Eingangsende des Heizabschnitts, durch den Kantenkühlabschnitt und zum Ausgangsende des Kühlabschnitts einen ersten Bewegungspfad definiert, und ferner umfassend eine Verstellsystem, das auf den Verteiler wirkt, um den Verteiler entlang mindestens eines der folgenden Pfade zu bewegen (a) einen vertikalen Hin- und Herbewegungspfad, der als ein zweiter Bewegungspfad in Richtung und weg von dem ersten Bewegungspfad definiert ist, und (b) einen horizontalen Hin- und Herbewegungspfad, der als ein dritter Bewegungspfad quer zum ersten Bewegungspfad definiert ist.

7. Ofen nach Anspruch 6, wobei der Verteiler einen ersten Verteilerabschnitt und einen zweiten Verteilerabschnitt umfasst, wobei jeder der ersten und zweiten Verteilerabschnitte ein erstes Verteilersegment, ein zweites Verteilersegment und ein drittes Verteilersegment umfasst, wobei jedes der Verteilersegmente ein erstes Ende und ein entgegengesetztes zweites Ende aufweist, wobei das erste Ende des zweiten Verteilersegments mit dem ersten Ende des ersten Verteilersegments und das zweite Ende des zweiten Verteilersegments mit dem ersten Ende des ersten Verteilersegments und das zweite Ende des zweiten Verteilersegments mit dem ersten Ende des dritten Verteilersegments verbunden ist, um jedem der ersten und zweiten Verteilerabschnitte eine "U"-Form zu verleihen; und das Verstellsystem erste Verstelleinrichtungen umfasst, die funktionsfähig mit dem ersten Verteilerabschnitt verbunden sind, und zweite Verstelleinrichtungen, die funktionsfähig mit dem zweiten Verteilerabschnitt verbunden sind, wobei die erste und zweite Verstelleinrichtung des Verstellsystems den ersten und zweiten Verteilerabschnitt entlang des dritten Bewegungspfades in eine Eingriffsposition bewegt, um den vorbestimmten Bereich zu umschließen, wobei die zweiten Enden der ersten und dritten Verteilersegmente des ersten Verteilersegments mit den zweiten Enden der ersten und dritten Verteilersegmente des zweiten Verteilersegments ausgerichtet sind, und zum Bewegen voneinander weg entlang der dritten Bewegung in eine Nicht-Eingriffsposition, wobei die zweiten Enden der ersten und dritten Verteilersegmente des ersten und zweiten Verteilersegments in einem ausreichenden Abstand voneinander beabstandet sind, damit sich die Umfangsform entlang des ersten Bewegungswegs zwischen den ersten und zweiten Verteilersegmenten und in Richtung des Kühlabschnitts des Ofens bewegen kann.

8. Ofen nach Anspruch 7, wobei die erste und zweite Verstelleinrichtung entlang eines hin- und hergehenden Weges bewegbar ist, der als eine vierte Bewegung definiert ist, die im Allgemeinen parallel zum ersten Bewegungsweg verläuft, um den ersten und zweiten Verteilerabschnitt in einer stromabwärts gerichteten Richtung in eine Rücklaufposition und in einer stromaufwärts gerichteten Richtung in eine Warteposition zu bewegen.

9. Ofen nach Anspruch 8, ferner umfassend einen mit dem Verstellsystem verbundenen Sensor, wobei der Sensor ein erstes Signal an die erste und zweite Verstelleinrichtung weiterleitet, wenn sich die Umfangsform in einer vorbestimmten Position innerhalb des Kantenkühlabschnitts befindet, um den ersten und zweiten Verteilerabschnitt entlang des dritten Bewegungspfades in die Eingriffsposition zu bewegen, um den vorbestimmten Bereich zu umschließen und den ersten und zweiten Verteilerabschnitt in der stromabwärts gerichteten Richtung entlang des vierten Bewegungspfades von der Warteposition in die Rückkehrposition zu bewegen, und ein zweites Signal an die erste und zweite Verstelleinrichtung, wenn sich die ersten und zweiten Verteilerabschnitte in der Rückkehrposition befinden, um die ersten und zweiten Verteilerabschnitte entlang des dritten Bewegungspfades in die Nicht-Eingriffsposition zu bewegen und die ersten und zweiten Verteilerabschnitte in der stromaufwärts gerichteten Richtung entlang des vierten Bewegungspfades von der Rückkehrposition in die Warteposition zu bewegen.

10. Ofen nach Anspruch 6, wobei der Verteiler eine endlose Form aufweist, um den vorbestimmten Bereich des Kantenkühlabschnitts zu umschließen, und das Verstellsystem eine erste Verstelleinrichtung umfasst, die den Verteiler entlang des zweiten Bewegungspfades zwischen einer Arbeitsposition mit dem Verteiler in einem ersten Abstand vom ersten Bewegungspfad und einer Nicht-Arbeitsposition in einem zweiten Abstand vom ersten Bewegungspfad bewegt, wobei der erste Abstand kleiner als der zweite Abstand ist.

11. Ofen nach Anspruch 10, wobei das Verstellsystem eine zweite Verstelleinrichtung umfasst, die auf die erste Verstelleinrichtung einwirkt, um die erste Verstelleinrichtung entlang eines hin- und hergehenden Weges parallel zum ersten Bewegungsweg innerhalb des Kantenkühlabschnitts zwischen einer Warteposition, die in einem ersten Abstand vom Austrittsende des Heizabschnitts bis zu einer Rückkehrposition beabstandet ist, die in einem zweiten Abstand vom Eintrittsende des Kühlabschnitts angeordnet ist, zu bewegen.

12. Ofen nach Anspruch 11, ferner umfassend einen Sensor, der mit der ersten und zweiten Verstelleinrichtung verbunden ist, wobei der Sensor ein erstes Signal zur ersten Verstelleinrichtung sendet, wenn sich die Umfangsform in die Kantenkühlstation bewegt, um den Verteiler entlang des zweiten Bewegungspfades in die Arbeitsposition zu bewegen, und zur zweiten Verstelleinrichtung, um die erste Verstelleinrichtung von der Warteposition in die Rückkehrposition zu bewegen, wenn sich die Umfangsform stromabwärts durch den Kantenkühlabschnitt bewegt, und ein zweites Signal zur ersten Verstelleinrichtung, wenn sich der Verteiler in der Rückkehrposition befindet, um den Verteiler entlang des zweiten Bewegungspfades in die Nicht-Arbeitsposition zu bewegen und zur zweiten Verstelleinrichtung, um die erste Verstelleinrichtung in die Warteposition zu bewegen.

13. Verfahren zum Verstärken mindestens der peripheren Kantenabschnitte mindestens einer Scheibe während der Lagerung auf einer Umfangsform, wobei die mindestens eine Scheibe gegenüberliegende Hauptflächen und eine periphere Kante zwischen den gegenüberliegenden Hauptflächen aufweist, die die gegenüberliegenden Hauptflächen miteinander verbindet, wobei das Verfahren umfasst:
Erwärmen der mindestens einen Scheibe auf eine Temperatur oberhalb des Dehnungspunkts der Scheibe;
Positionieren eines Wärmeauszugsmediums ausgerichtet auf ausgewählte periphere Kantenabschnitte der mindestens einen Scheibe;
Entnehmen von Wärme aus mindestens ausgewählten peripheren Kantenabschnitten der mindestens einen Scheibe, wobei ein Mittelabschnitt mindestens einer der Hauptflächen der mindestens einen Scheibe außerhalb des Kontakts mit einem festen Gegenstand angeordnet ist, wobei Wärme aus den mindestens ausgewählten peripheren Kantenabschnitten der mindestens einen Scheibe mit einer Geschwindigkeit extrahiert wird, die ausreicht, um die Kantenfestigkeit der mindestens ausgewählten peripheren Kantenabschnitte und angrenzenden Randkantenabschnitte der mindestens einen Scheibe zu erhöhen und eine Temperaturdifferenz zwischen den peripheren Kantenabschnitten der mindestens einen Scheibe und dem inneren Abschnitt der mindestens einen Scheibe zu erzeugen, um ein Brechen der mindestens einen Scheibe während der Anwendung der Wärmeextrahierung zu verhindern,
wobei der Schritt der Wärmeextrahierung aus der peripheren Kante ausgewählt ist aus dem Leiten eines Gases auf ausgewählte periphere Kantenabschnitte der Scheiben und/oder dem Bereitstellen eines Unterdrucks in ausgewählten peripheren Kantenabschnitten der Scheiben, unter Verwendung eines Verteilers, der die peripheren Kantenabschnitte der Scheibe umgibt und eine Innenfläche aufweist, die den peripheren Kantenabschnitten der Scheibe zugewandt ist, und der Durchgänge aufweist, um Gas zu oder von den peripheren Kantenabschnitten der Scheibe zu bewegen.

14. Verfahren nach Anspruch 13, wobei die mindestens eine Scheibe eine erste und zweite Glasscheibe ist und das Erwärmen erfolgt durch:
Platzieren der ersten Scheibe über der zweiten Glasscheibe;
Positionieren der ersten und zweiten Scheibe auf einer Umfangsform;
Erwärmen der ersten und zweiten Scheiben auf ihre Erweichungstemperatur, um mindestens den inneren Abschnitt der Scheiben zu biegen, während sie auf der Umfangsform abgestützt sind, und ferner umfassend das weitere Abkühlen der Glasscheiben nach dem Extrahieren von Wärme.

15. Verfahren nach Anspruch 13, wobei der Abkühlungsschritt ausgewählt ist aus einem der folgenden Schritte: Vergüten der geformten Glasscheiben, Wärmehärten der geformten Glasscheiben und Tempern der geformten Glasscheiben.

16. Verfahren nach Anspruch 13, wobei während der Durchführung des Wärmeentnahmeschrittes Wärme aus dem gesamten Umfang der Scheiben entnommen wird.

17. Verfahren nach Anspruch 13, umfassend den Schritt von Herstellen einer Windschutzscheibe durch Erwärmen und Formen eines Paares von Glasscheiben, während sie auf einer Umfangsform getragen werden, Tempern der geformten Scheiben, Platzieren einer Kunststoffzwischenschicht zwischen den geformten Glasscheiben und Autoklavieren der geformten Glasscheiben mit der Kunststoffzwischenschicht dazwischen, um die geformten Glasscheiben und die Kunststoffzwischenschicht miteinander zu verbinden.

18. Verfahren nach Anspruch 17, wobei die vergüteten geformten Scheiben eine Kantenfestigkeit von mindestens 3.000 psi (20,7 x ¹⁰⁶ Pa) aufweisen.

19. Verfahren nach Anspruch 17, wobei die Scheiben während des Ausführens des Erwärmens und Umformens auf eine Temperatur im Temperaturbereich von 950 bis 1300°F (510 bis 704°C) erwärmt werden.

20. Verfahren nach Anspruch 17, wobei die mindestens ausgewählten peripheren Kantenabschnitte den gesamten Umfang der Scheiben umfassen, so dass während des Ausführens der Wärmeentnahme Wärme aus dem gesamten Umfang der Scheiben entnommen wird.

21. Vergütete Glasscheibe mit einer verstärkten peripheren Kante, wobei die verstärkte periphere Kante in einem Abstand von 0,125 Zoll (0,32 cm) von der peripheren Kante der vergüteten Glasscheibe eine Festigkeit von mindestens 3.000 psi (20,7 x ¹⁰⁶ Pa) aufweist.

22. Glasscheibe nach Anspruch 21, wobei die Glasscheibe Teil einer Sichtscheibe ist, ausgewählt aus Sichtscheiben für Oberwasser-, Unterwasser-, Luft- und/oder Raumfahrzeuge; Fahrzeugseitenscheiben, Kraftfahrzeug-Heckscheiben, Mehrfachverglasungen für Wohnungen, Gebäude und temperaturkontrollierte Lagerräume mit einem Sichtbereich.

23. Glasscheibe nach Anspruch 21, wobei die Glasscheibe eine geformte Glasscheibe ist.

24. Glasscheibe nach Anspruch 23, wobei die geformte Glasscheibe eine erste geformte Glasscheibe ist und die erste Glasscheibe eine Scheibe aus einem Paar geformter Glasscheiben ist, die durch eine Kunststoffzwischenschicht miteinander verklebt sind, um ein Laminat bereitzustellen.

25. Glasscheibe nach Anspruch 24, wobei das Laminat eine Autowindschutzscheibe ist.

26. Glasscheibe nach Anspruch 25, wobei eine Innenfläche von mindestens einer der Scheiben des Laminats eine elektrisch leitfähige Beschichtung oder eine Sonnenschutzbeschichtung aufweist.

## Revendications

1. Four équipé d'un dispositif de refroidissement permettant de refroidir des portions de bords d'une ou plusieurs feuilles afin de renforcer les portions de bords des feuilles, comprenant :
une section définie en tant que section de chauffage (50) pouvant atteindre une température prédéterminée, la section de chauffage (50) ayant une extrémité d'entrée et une extrémité de sortie ;
une section définie en tant que section de refroidissement (60) pouvant avoir un gradient de température à partir d'une extrémité d'entrée de la section de refroidissement (60) à l'extrémité de sortie de la section de refroidissement (60), l'extrémité d'entrée de la section de refroidissement (60) est montée de manière fixe sur l'extrémité de sortie de la section de chauffage (50) ;
une section définie en tant que section de refroidissement de bords (54) entre l'extrémité de sortie de la section de chauffage (50) et l'extrémité d'entrée de la section de refroidissement (60) ; et
un dispositif de refroidissement de bords (120) positionné dans la section de refroidissement de bords (54) par rapport à une zone prédéterminée, et pouvant refroidir au moins des portions de bords périphériques sélectionnées de la feuille à un rythme plus rapide que les portions centrales de la feuille,
dans lequel le dispositif de refroidissement de bords (120) (a) est sélectionné à partir d'un équipement permettant de diriger du gaz vers les portions de bords périphériques de la feuille et d'un équipement permettant de fournir un vide pour tirer du gaz des portions de bords périphériques de la feuille, et (b) comprend un collecteur encerclant les portions de bords périphériques de la feuille, le collecteur ayant une surface intérieure faisant face aux portions de bords périphériques de la feuille et ayant des voies de passage pour déplacer le gaz vers les portions de bords périphériques de la feuille, ou à distance de celles-ci,
comprenant en outre un système de transport permettant de déplacer au moins une feuille de verre à travers la section de chauffage, à travers la section de refroidissement de bords pour positionner la feuille dans la zone prédéterminée,
et à travers la section de refroidissement, la feuille de verre de l'extrémité de sortie de la section de refroidissement étant une feuille de verre ayant des portions de bords renforcées,
dans lequel la section de chauffage est capable d'atteindre une température suffisante pour chauffer l'au moins une feuille de verre à sa température de formage, et le système de transport comprend :
un moule de contour destiné au support de l'au moins une feuille de verre, et
un convoyeur destiné au déplacement du moule de contour séquentiellement à travers la section de chauffage, de la section de refroidissement de bords et de la section de refroidissement de bords du four.

2. Four selon la revendication 1, dans lequel le dispositif de refroidissement de bords est un collecteur ayant une pluralité de trous espacés.

3. Four selon la revendication 1, comprenant en outre un agencement de transport permettant de déplacer la feuille de verre à travers la section de chauffage, dans la zone prédéterminée de la section de refroidissement de bords, dans lequel au moins des portions périphériques de la feuille sont refroidies plus vite que les portions centrales de la feuille, et à travers la section de refroidissement, la section de refroidissement présentant un gradient de température pour prévoir la feuille de verre dans une des catégories suivantes : une feuille recuite, une feuille trempée et une feuille renforcée par la chaleur.

4. Four selon la revendication 1, dans lequel le four comprend en outre une pluralité de zones alignées le long d'une trajectoire de mouvement, un nombre sélectionné de zones étant désigné comme la section de chauffage, un nombre sélectionné de zones étant désigné comme la section de refroidissement et au moins une zone est désignée comme la section de refroidissement de bords, et une partie de la trajectoire s'étendant à travers la section chauffage étant généralement parallèle à une partie de la trajectoire s'étendant à travers la section de refroidissement, et le système de transport comprend en outre au moins une boîte ayant le moule de contour à l'intérieur, déplaçable séquentiellement dans une zone et après une période de temps prédéterminée, hors de la zone dans la prochaine zone adjacente.

5. Four selon la revendication 4, comprenant en outre un équipement de déplacement pour déplacer le collecteur dans la boîte dans l'au moins une zone désignée en tant que section de refroidissement de bords afin d'encercler la zone prédéterminée, et déplacer le collecteur hors de la boîte.

6. Four selon la revendication 1, dans lequel le mouvement du moule de contour à partir de l'extrémité d'entrée de la section de chauffage, à travers la section de refroidissement de bords et vers l'extrémité de sortie de la section de refroidissement, définit une première trajectoire de mouvement, et comprenant en outre un système de déplacement agissant sur le collecteur pour déplacer le collecteur le long d'au moins une des trajectoires suivantes (a) une trajectoire de va-et-vient verticale définie en tant que deuxième trajectoire de mouvement vers la première trajectoire de mouvement, et à distance de celle-ci, et (b) une trajectoire de va-et-vient horizontale définie en tant que troisième trajectoire de mouvement transversale à la première trajectoire de mouvement.

7. Four selon la revendication 6, dans lequel le collecteur comprend une première section de collecteur et une seconde section de collecteur, chacune des première et seconde sections de collecteur comprend un premier segment de collecteur, un deuxième segment de collecteur et un troisième segment de collecteur, chacun des segments de collecteur présentant une première extrémité et une seconde extrémité opposée à la première extrémité du deuxième segment de collecteur joint à la première extrémité du premier segment de collecteur et la seconde extrémité du deuxième segment de collecteur joint à la première extrémité du troisième segment de collecteur pour fournir à chacune des première et seconde sections de collecteur une forme en « U » ; et le système de déplacement comprend un premier équipement de déplacement relié de manière opérationnelle à la première section de collecteur et un second équipement de déplacement relié de manière opérationnelle à la seconde section de collecteur, les premier et second équipements de déplacement du système de déplacement déplaçant les première et seconde sections de collecteur l'une vers l'autre le long de la troisième trajectoire de mouvement dans une position en prise pour encercler la zone prédéterminée, les secondes extrémités des premier et troisième segments de collecteur de la première section de collecteur sont alignées avec les secondes extrémités des premier et troisième segments de collecteur de la seconde section de collecteur, respectivement, et à distance l'une de l'autre le long du troisième mouvement dans une position de non-prise, les secondes extrémités des premier et troisième segments de collecteur des première et seconde sections de collecteur sont espacées l'une de l'autre d'une distance suffisante pour que le moule de contour se déplace le long de la première trajectoire de mouvement entre les première et seconde sections de collecteur et vers la section de refroidissement du four.

8. Four selon la revendication 7, dans lequel le premier et le second équipement de déplacement peuvent être déplacés le long d'une trajectoire de va-et-vient définie en tant que quatrième mouvement généralement parallèle à la première trajectoire de mouvement pour déplacer les première et seconde sections de collecteur dans une direction aval à une position de retour et dans une direction amont à une position d'attente.

9. Four selon la revendication 8, comprenant en outre un capteur relié au système de déplacement, dans lequel le capteur transmet un premier signal au premier et au second équipement de déplacement lorsque le moule de contour se trouve dans une position prédéterminée à l'intérieur de la section de refroidissement de bords pour déplacer les première et seconde sections de collecteur le long d'une troisième trajectoire de mouvement dans une position en prise afin d'encercler la zone prédéterminée, et pour déplacer les première et seconde sections de collecteur dans la direction aval le long de la quatrième trajectoire de mouvement à partir de la position d'attente vers la position de retour, et un second signal au premier et au second équipement de déplacement lorsque les première et seconde sections de collecteur se trouvent à la position de retour pour déplacer les première et seconde sections de collecteur le long de la troisième trajectoire de mouvement vers la position de non-prise et pour déplacer les première et seconde sections de collecteur dans la direction amont le long de la quatrième trajectoire de mouvement à partir de la position de retour à la position d'attente.

10. Four selon la revendication 6, dans lequel le collecteur possède une forme sans fin pour encercler la zone prédéterminée de la section de refroidissement de bords, et le système de déplacement comprend un premier équipement de déplacement qui déplace le collecteur le long de la deuxième trajectoire de mouvement entre une position de fonctionnement avec le collecteur à une première distance éloignée de la première trajectoire de mouvement et une position de non-fonctionnement éloignée d'une seconde distance à partir de la première trajectoire de mouvement, la première distance étant inférieure à la seconde distance.

11. Four selon la revendication 10, dans lequel le système de déplacement comprend un second équipement de déplacement agissant sur le premier équipement de déplacement pour déplacer le premier équipement de déplacement le long d'une trajectoire de va-et-vient parallèle à la première trajectoire de mouvement à l'intérieur de la section de refroidissement de bords entre une position d'attente espacée d'une première distance à partir de l'extrémité de sortie de la section de chauffage à une position de retour espacée d'une seconde distance à partir de l'extrémité d'entrée de la section de refroidissement.

12. Four selon la revendication 11, comprenant en outre un capteur relié au premier et au second équipement de déplacement, le capteur envoyant un premier signal lorsque le moule de contour se déplace dans la station de refroidissement de bords vers le premier équipement de déplacement pour déplacer le collecteur le long de la deuxième trajectoire de mouvement à la position de fonctionnement et vers le second équipement de déplacement pour déplacer le premier équipement de déplacement de la position d'attente à la position de retour lorsque le moule de contour se déplace en aval à travers la section de refroidissement de bords, et un second signal lorsque le collecteur se trouve dans la position de retour vers le premier équipement de déplacement pour déplacer le collecteur le long de la deuxième trajectoire de mouvement à la position de non fonctionnement et vers le second équipement de déplacement pour déplacer le premier équipement de déplacement à la position d'attente.

13. Procédé de renforcement au moins des portions de bords périphériques d'au moins une feuille tandis qu'elle est supportée sur un moule de contour, l'au moins une feuille présentant des surfaces principales opposées et un bord périphérique entre elles, et interconnectant les surfaces principales opposées, le procédé comprenant les étapes consistant à :
chauffer l'au moins une feuille à une température au-dessus d'un point de contrainte de la feuille ;
positionner un moyen d'extraction de chaleur en face des portions de bords périphériques sélectionnées de l'au moins une feuille ;
extraire de la chaleur à partir d'au moins les portions de bords périphériques sélectionnées de l'au moins une feuille tout en ayant une portion centrale d'au moins une des surfaces principales de l'au moins une feuille hors de contact d'un objet solide, la chaleur étant extraite d'au moins les portions de bords périphériques sélectionnées de l'au moins une feuille à un rythme suffisant pour augmenter la résistance des bords au moins des portions de bords périphériques sélectionnées et des portions de bords marginales adjacentes de l'au moins une feuille, et pour établir une température différentielle entre les portions de bords périphériques de l'au moins une feuille et la portion centrale de l'au moins une feuille afin d'empêcher la fracturation de l'au moins une feuille pendant la mise en oeuvre de l'extraction de chaleur,
dans lequel l'étape d'extraction de chaleur à partir du bord périphérique est sélectionnée à partir de la direction d'un gaz vers les portions de bords périphériques sélectionnées des feuilles et/ou de la fourniture d'une pression négative autour des portions de bords périphériques sélectionnées des feuilles en utilisant un collecteur qui encercle les portions de bords périphériques de la feuille et présentant une surface intérieure faisant face aux portions de bords périphériques de la feuille et ayant des voies de passage pour déplacer le gaz vers les portions de bords périphériques de la feuille, ou à distance de celles-ci.

14. Procédé selon la revendication 13, dans lequel l'au moins une feuille est une première et une seconde feuille de verre et le chauffage est pratiqué en :
plaçant la première feuille sur la seconde feuille de verre ;
positionnant la première et la seconde feuille sur un moule de contour ;
chauffant les première et seconde feuilles à leur température de ramollissement pour affaisser au moins la portion centrale des feuilles pendant qu'elles sont supportées sur le moule de contour, et comprenant en outre un refroidissement supplémentaire des feuilles de verre après l'extraction de la chaleur.

15. Procédé selon la revendication 13, dans lequel l'étape de refroidissement est sélectionnée à partir d'une des étapes suivantes : recuire les feuilles de verre formées, renforcer par la chaleur les feuilles de verre formées et tremper les feuilles de verre formées.

16. Procédé selon la revendication 13, dans lequel pendant la mise en oeuvre de l'étape d'extraction de chaleur, la chaleur est extraite de la périphérie complète des feuilles.

17. Procédé selon la revendication 13, comprenant l'étape consistant à :
fabriquer un pare-brise en chauffant et en formant une paire de feuilles de verre pendant qu'elles sont supportées sur un moule de contour, en recuisant les feuilles formées en plaçant une couche intermédiaire de plastique entre les feuilles de verre formées, et par l'autoclavage des feuilles de verre formées présentant la couche intermédiaire de plastique entre elles pour stratifier les feuilles de verre formées et la couche intermédiaire de plastique.

18. Procédé selon la revendication 17, dans lequel les feuilles formées recuites présentent une résistance de bords d'au moins 3000 psi (20,7 x 10⁶ Pa).

19. Procédé selon la revendication 17, dans lequel les feuilles sont chauffées à une température dans la plage de température allant de 950 à 1300°F (510 à 704°C) pendant la mise en oeuvre du chauffage et du formage.

20. Procédé selon la revendication 17, dans lequel au moins les portions de bords périphériques sélectionnées comprennent la périphérie entière des feuilles de telle sorte que pendant la mise en oeuvre de l'extraction de chaleur, la chaleur est extraite à partir de la périphérie entière des feuilles.

21. Feuille de verre recuite présentant un bord périphérique renforcé, dans lequel le bord périphérique renforcé à une distance de 0,125 pouces (0,32 cm) du bord périphérique de la feuille de verre recuite présente une résistance d'au moins 3000 psi (20,7 x 10⁶ Pa).

22. Feuille de verre selon la revendication 21, dans lequel la feuille de verre fait partie d'une transparence sélectionnée à partir de transparences concernant le dessus de l'eau, le dessous de l'eau, les véhicules aériens et/ou spatiaux ; des fenêtres latérales automobiles, des fenêtres arrières automobiles, des fenêtres à vitrage multiple pour des maisons, des immeubles et des compartiments de stockage à régulation de température ayant une zone de visualisation.

23. Feuille de verre selon la revendication 21, dans lequel la feuille de verre est une feuille de verre formée.

24. Feuille de verre selon la revendication 23, dans lequel la feuille de verre formée est une première feuille de verre formée et la première feuille de verre est une feuille d'une paire de feuilles de verre formées qui adhèrent les unes aux autres grâce à une feuille de couche intermédiaire en plastique pour fournir un stratifié.

25. Feuille de verre selon la revendication 24, dans lequel le stratifié est un pare-brise automobile.

26. Feuille de verre selon la revendication 25, dans lequel une surface interne d'au moins une des feuilles du stratifié présente un revêtement électroconducteur ou un revêtement solaire.
